Europäisches Patentamt

European Patent Office

Office européen des brevets

(11) Publication number: **0 042 235**
A1

BAD ORIGINAL

# EUROPEAN PATENT APPLICATION

(21) Application number: 81302439.5

(22) Date of filing: 02.06.81

(51) Int. Cl.³: **H 02 M 7/537, H 02 P 13/18**

(30) Priority: 13.06.80 US 159019

(43) Date of publication of application: 23.12.81
Bulletin 81/51

(84) Designated Contracting States: **BE DE FR GB IT**

(71) Applicant: **DOW CORNING CORPORATION, 3901 S.
Saginaw Road, Midland Michigan 48640 (US)**

(72) Inventor: **Rotolo, Guglielmo Edward, 176 Marine Drive,
Des Plaines Illinois 60016 (US)**

(74) Representative: **Laredo, Jack Joseph et al, Elkington and
Fife High Holborn House 52/54 High Holborn, London,
WC1V 6SH (GB)**

(54) **DC to AC Inverter.**

(57) A direct current to alternating current inverter in-
cluding a low power, sinusoidal signal source (10) rec-
tified to provide a rectified reference sine wave, a series
string of battery groups (26), (28), (30) and (32), an out-
put bridge circuit (14) connected to the rectified refer-
ence sine wave to provide an alternating output wave-
form conforming to the rectified reference sine wave,
and a series of electrical switches (42), (44) and (46)
responsive to the rectified reference sine wave to se-
quentially switch associated battery groups to the out-
put circuit, thereby adding power from the batteries to
the alternating output waveform.

-1-

DC TO AC INVERTER

This invention relates to apparatus providing alternating current for electrical energy from a direct current energy source, and in particular to such apparatus wherein an alternating current source can be provided from a plurality of respective direct current sources of low power levels.

## Background of the Invention

Reference may be made to the following United States Patents of interest: 1,691,986, issued November 20, 1928, to Nyquist; 3,002,142, issued September 26, 1961, to Jensen; 3,100,851, issued August 13, 1963, to Ross et al; 3,214,671, issued October 26, 1965, to Corey; 3,227,889, issued January 4, 1966, to Paynter; 3,374,414, issued March 19, 1968, to Garnett; 3,491,282, issued January 20, 1970, to Heinrich et al; 3,539,902, issued November 10, 1970, to Hickling; 3,581,212, issued May 25, 1971, to McMurray; 3,657,633, issued April 18, 1972, to Urish; 3,767,996, issued October 23, 1973, to Bates; 4,032,832, issued June 28, 1977, to Miller; and 4,052,657, issued October 4, 1977, to Kleiner and Hochwald.

With the increasing desire to use solar energy to eventually develop useful alternating current sources,

-2-

such as for household use, it becomes important to efficiently convert solar energy to electrical energy. Presently available solar cells provide low power, direct current electrical energy which cannot be readily adapted by existing inverters to provide an alternating current source of the power levels required to operate a household. The above-referenced U. S. Patents illustrate the state of the art with respect to inverter devices for inverting direct current energy to alternating current energy. The art includes stepped waveform generation synthesizing an approximate sine wave followed by filtering to smooth out the voltage level steps.

It is especially desired that the inversion of direct current to alternating current be accomplished efficiently, thus discouraging the use of inductance elements which consume power. Also, it is desired that the direct current to alternating current inverter be relatively inexpensive. Ordinarily, these goals are at opposite extremes. Inductance devices used as filters, chokes, etc., are normally required in prior art inverters in order to filter the inverter supplied stepped waveform and thereby provide a useful sinusoidal, alternating current waveform. On the other hand, the suggested use of expensive semiconductors and other elements in prior art stepped waveform inverters without the need for inductive filters is not desired in many instances in view of the extra added costs. It is therefore desired to provide an efficient inverter which does not require inductive elements and which is relatively inexpensive to construct.

0042235

-3-

## Summary of the Invention

The present invention includes a low power, sine wave reference signal coupled to an output circuit, and to switching means including a series of batteries, enabling the switching means to follow the sine wave reference to sequentially switch in batteries at desired voltage levels and thereby provide a higher power, alternating waveform. The low power, reference sine wave acts as a follower pattern signal in the output with the switching in of the batteries contributing the desired power levels to the alternating waveform output. Thus, no inductive filter is required since the output waveform is not synthesized from a stepped waveform as in the prior art, but rather is . derived directly from the reference sine wave.

In accordance with the principles of the present invention, there is specifically provided a direct current to alternating current inverter which includes a low power, sinusoidal signal source with the signal rectified to provide a rectified reference sine wave, a plurality of respective direct current sources, such as batteries connected in series, an output bridge circuit coupled intermediate the direct current sources and the rectified reference sine wave, providing an alternating waveform in the output conforming to the rectified reference sine wave, and switching means responsive to and following the rectified reference sine wave to sequentially switch associated batteries to the output circuit. The switching means includes respective switches associated with direct current sources, with a normally back-biased diode and a semiconductor switching element responsive to a respective level of the rectified reference sine wave to forward bias the diode and thereby sequentially switch the associated direct current sources to the output bridge circuit. The switching means thus follows the reference sine wave and switches in added power from the batteries to the alternating waveform in the output.

In a constructed embodiment of the invention, for use in providing a standard 120 V.A.C. household current, an inexpensive 60 Hz oscillator, transistor amplifier and standard bell transformer with rectifier diodes were used to suppy a low power, rectified sinusoidal signal of 168 volts peak value which served as the follower signal pattern in the output circuit. The 168-volt level represents the peak voltage required to provide 120 volts R.M.S. Fourteen 12-volt batteries were connected in series with diodes connected respectively after the first five series-connected batteries, after the next four batteries, after the next three batteries, and after the final two batteries. The batteries were switched in at the 60-volt level and sequentially thereafter at 108 volts, 144 volts, and 168 volts. After the initial 60-volt level, transistor switching means are connected to the succeeding switching diodes with each of the switching means including a

0042235

-5-

potentiometer for setting the succeeding switching elements to cut in at the 60-volt, 108-volt and 144-volt levels in response to the rectified reference sine wave and thereby add power to the follower signal pattern in the output. The constructed embodiment is relatively inexpensive and does not require any inductive elements in the output circuit in order to provide an alternating current waveform. The unique direct current to alternating current inverter illustrated and described herein is particularly adaptable for use with solar cells for charging the low voltage batteries utilized in the present invention.

## Brief Description of the Drawings

The invention will be better understood from the following detailed description thereof taken in conjunction with the accompanying drawings in which:

FIGURE 1 is a block diagram illustrating the broad aspects of the present invention;

FIGURE 2 is a block diagram illustrating in more detail the means provided for developing a rectified, low power, reference sine wave which, in accordance with the principles of the present invention, is utilized to provide an alternating waveform in the output and to sequentially switch direct current sources to the output to add power to the output at selected voltage levels; and

FIGURES 3 and 3A taken together comprise a schematic diagram illustrating a preferred embodiment of the present invention.

## Detailed Description

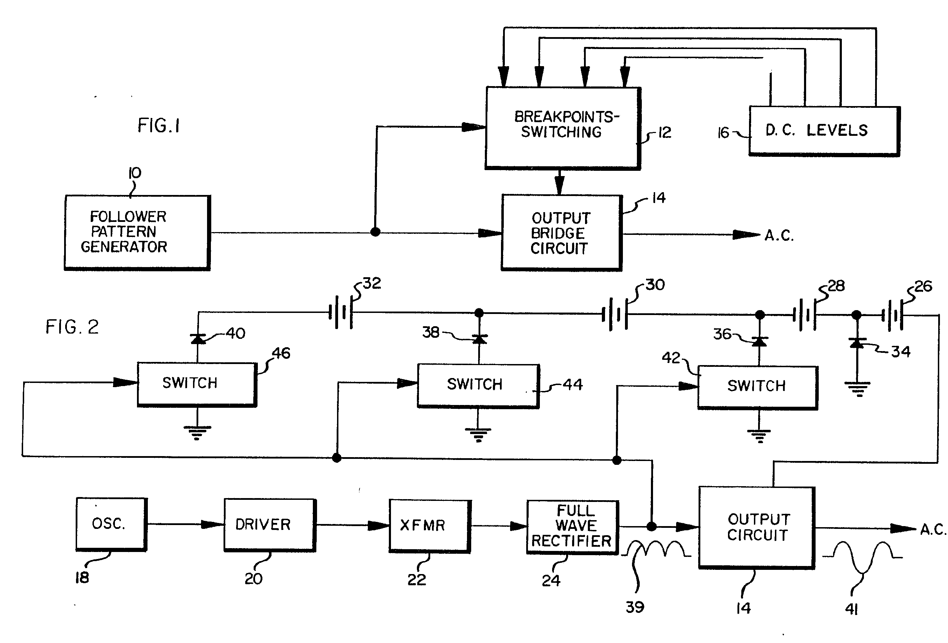

In the block diagram of FIGURE 1, the follower pattern generator 10 provides a rectified reference sine wave coupled to a switching circuit 12 and to an output bridge circuit 14 for sequentially switching direct current sources 16 and coupling them through the output bridge circuit to add to the alternating waveform conforming to the rectified reference sine wave.

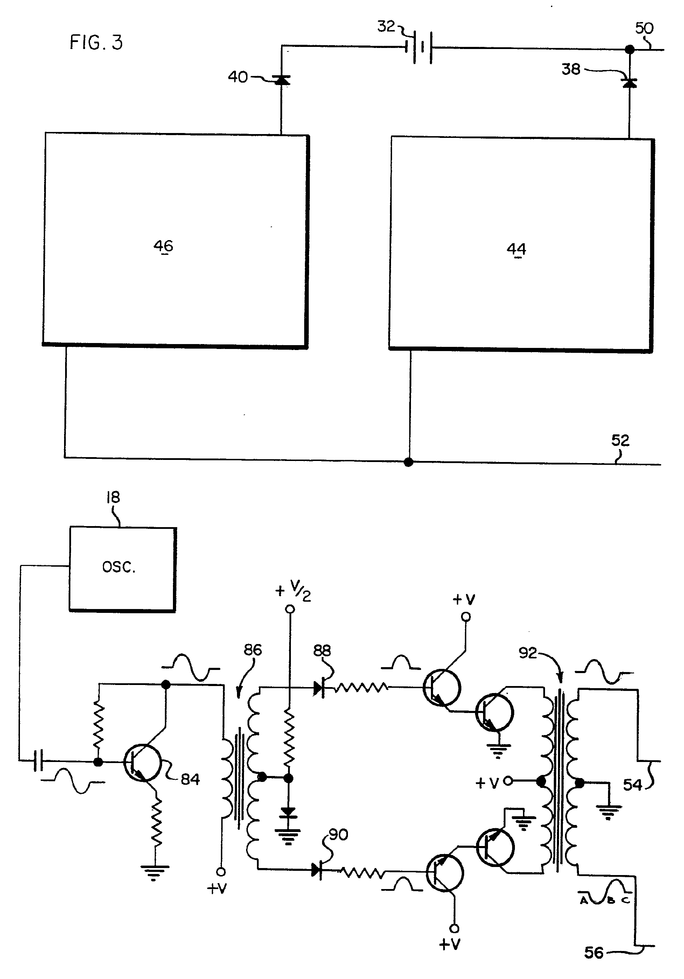

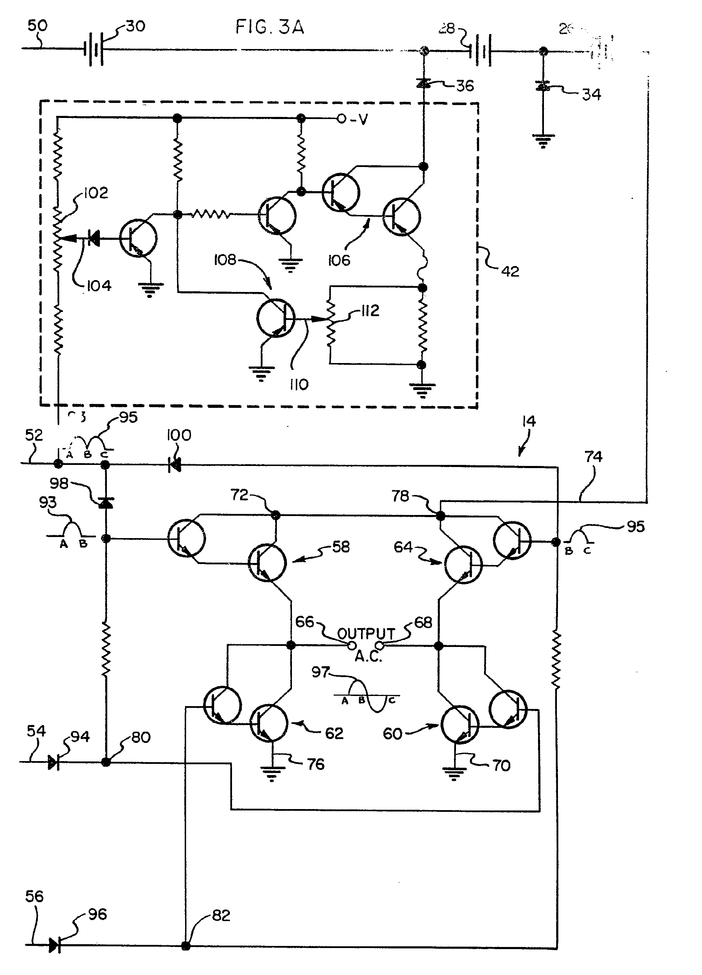

FIGURE 2 illustrates in block diagram form an oscillator 18, driver 20, transformer 22 and full wave rectifier 24 to provide a rectified reference sine wave signal of low power. In FIGURE 2, the direct current levels 16 of FIGURE 1 have been shown as the respective series connected batteries 26, 28, 30 and 32, intermediate of which are connected respective diodes 34, 36, 38 and 40. Switch means 42, 44 and 46 are connected respectively to diodes 36, 38 and 40. The output circuit 14 transforms the reference signal 39 to an alternating waveform 41. As the level of the rectified reference sine wave approaches a first switching level, switch 42 is activated to forward bias diode 36 and sequentially couple series-connected batteries 26 and 28 to the output circuit to add power to the alternating waveform 41. As will be described in more

-7-

detail in connection with FIGURES 3 and 3A, switches 44 and 46 are sequentially activated at respective levels of the rectified reference sine wave signal to sequentially add batteries 30 and 32 in series with batteries 28 and 26.

FIGURES 3 and 3A can be taken together by placing them side by side with the schematic circuit diagrams arranged so that the lines 50, 52, 54 and 56 are aligned. The output bridge circuit 14 includes four sets 58, 60, 62, 64 of paired transistors in a Darlington connection. The output terminals 66, 68 are connected to the Darlington pairs so that current flows during one half cycle from ground terminal 70 through output terminals 68, 66, to terminal 72 and via connecting line 74 to the batteries 26. During the next half cycle, current flows between ground terminal 76, through output terminals 66, 68, terminal 78, and through connecting line 74 to the batteries 26. Thus, the polarity applied to the load connected across output terminals 66 and 68 alternates each half cycle, thereby providing an alternating current waveform.

During the first half cycle, a positive signal is applied to terminal 80 to activate transistor pairs 58 and 60. During the other half cycle, a positive signal is applied to terminal 82 to activate transistor pairs 62 and 64. For reference purposes, reference characters A, B, and C have been located on the signal waveforms shown on FIGURES 3 and 3A. The first signal half cycle is illustrated between reference characters A and B, and the second half cycle is between characters B and C.

A low power 60 Hz oscillator 18 provides the follower signal waveform desired, which is then initially amplified by transistor amplifier 84, and split into two positive half cycle components by transformer 86 and diodes 88, 90. The reference signal waveform is further amplified, fed to step-up transformer 92 and rectified through diodes 94, 96, to provide the rectified reference signal waveforms 93, 95 at respective terminals 80 and 82.

Reference signal waveforms 93, 95 drive respective Darlington connected transistor pairs 58, 60 and 62, 64 to provide an alternating waveform 97 across the load at output terminals 66, 68. The peak voltage value of signals 93, 95 should be set to the peak value desired for the alternating waveform 97. Output waveform 97 would be of relatively low power level except for the sequential activation of switches 42, 44, 46 in following the reference signals 93, 95 to add in the battery power as is next described.

The reference signals 93, 95 applied at respective terminals 80 and 82 are also respectively applied through diodes 98 and 100 to line 52 which is common to each of the switches 42, 44, and 46. The components included in the electronic switch 42 are illustrated in detail in FIGURE 3A, it being understood that similar components are included in switches 44 and 46 shown in FIGURE 3 with an adjustment in certain component values to conform to the respective switching level. Potentiometer 102 is adjusted through its movable arm 104 to set the break point of the switch 42 to a desired voltage level where batteries 28 will be added to batteries 26, with the combined voltage level being fed to the output bridge circuit 14 through the line 74. As described previously, the voltage level on the line 74 is coupled to the output terminals 66 and 68 through the respective paired transistors 58, 60 and 62, 64.

Thus, initially, the voltage of batteries 26 is presented on line 74. Thereafter, as the reference signal waveform applied to line 52 reaches the first set break point provided in switch 42 by the setting on potentiometer arm 104, diode 36 conducts to add on the voltage of batteries 28 to that of batteries 26. Conduction of diode 36 provides a back bias to diode 34 so as to shut off diode 34. A pair of Darlington connected transistors 106 is coupled to the diode 36 and also to the current limiter 108 in the first switching circuit 42. Movable arm 110 on potentiometer 112 may be adjusted to set the current limiting point for switching circuit 42.

In switching circuit 44, there is also provided a similar break point setting circuit such as potentiometer 102 and movable arm 104 to set a voltage level at which the diode 38 will conduct to thereby add the voltage of batteries 30 to that of batteries 28 and 26. The conduction of diode 38 back biases diode 36 to shut off diode 36 associated with the first switching circuit 42.

0042235

-10-

This operation places the voltage of batteries 30 in series with that of batteries 28 and 26 onto line 74. The next switching circuit 46 contains similar components to those shown in switching circuit 42 with the values of the components and the adjustment of its respective break point potentiometer set to the next desired break point level. When this next break point level is reached, diode 40 conducts and diode 38 is shut off. The voltage of batteries 32 is added in series to that of batteries 30, 28 and 26 and presented on line 74 as previously described. In this manner, the addition of the batteries follows the reference signal to provide output waveform 97 with increased power.

In a constructed embodiment of the invention, batteries 26 comprised five 12-volt batteries in series; batteries 28 comprised four 12-volt batteries in series; batteries 30 comprised three 12-volt batteries in series; and batteries 32 comprised two 12-volt batteries in series. Thus, batteries 26 total 60 volts placed on line 74, which was sequentially increased as each break point was reached, respectively to 108 volts, 144 volts, and 168 volts. Diode 34 conducted up to the 60-volt level. Potentiometer arm 104 in switching circuit 42 was set so that diode 36 conducted at the 60-volt level. Switch 44 was set so that diode 38 conducted at the 108-volt level, and switch 46 was set so that diode 40 conducted at 144 volts. Reference

-11-

signals 93 and 95 were provided with voltage peaks of 168 volts. The output waveform 97 corresponded to an alternating half cycle combination of the rectified reference signals 93 and 95.

In operation, assuming the first reference signal 93 between half cycle points A and B is applied to terminal 80 and line 52, Darlington pairs 58 and 60 are conducting to transfer signal 93 current amplified to output terminals 66, 68. Diode 34 is then conducting to place batteries 26 on the terminals 66 and 68, the output terminal 66 being positive. When the reference signal 93 at line 52 reaches 60 volts, switch 42 is activated to add in batteries 28 to the output terminals 66, 68, still through Darlington pairs 58 and 60, since these transistors are still being switched on during the full half cycle of the reference signal 93 between points A and B. Therefore, sequentially as the reference signal reaches 108 volts, switch 44 is activated to add in batteries 30, and switch 46 is activated to add in batteries 32. In the next quarter cycle of the reference signal 93 from its peak to the reference half cycle point B, the batteries presented to the terminals 66 and 68 are sequentially decreased by deactivating sequentially respective switches 46, 44 and 42 following in response to the applied reference signal on line 52.

During the next reference half cycle of signal 95, between points B and C, Darlington connected transistor pairs 62 and 64 are conducting and pairs 58 and 60 are not conducting. This places terminal 68 positive with respect to terminal 66, to thereby provide the desired alternating waveform. The operation of the illustrated inverter apparatus during the half cycle from B to C is the same as previously described between the half cycle A to B, with each of the switches 42, 44 and 46 operating sequentially in response to the same reference waveform which activates the output bridge 14.

It is to be understood, of course, that the break points presented herein are given for illustration of the invention only, and other break point levels can be provided as desired in accordance with the teachings herein. In addition, four power field effect transistors can be used in the output bridge circuit 14 rather than the four pairs of Darlington connected transistors shown in FIGURE 3A.

Thus, the inverter apparatus illustrated herein provides a very efficient, low cost and low power consumption apparatus for converting direct current to alternating current as compared to prior art inductor type inverters.

The foregoing detailed description has been given for clearness of understanding only, and no unnecessary limitations should be understood therefrom, as modifications will be obvious to those skilled in the art.

CLAIMS:

1.      A DC to AC inverter characterised by:

(A)      a low power, sinusoidal signal source including means generating a rectified reference sine wave;

(B)      an output circuit having input and output ιrminals, said input terminals being coupled to said rectified reference sine wave, said output circuit including coupling means coupling said rectified reference sine wave to said output terminals, to provide an alternating sinusoidal output waveform of alternating half cycle  polarity, and one series end of a plurality of series connected direct current sources being connected to said output circuit; and

(C)      A plurality of switching elements, each connected to said rectified references sine wave and to an associated one of said respective direct current sources, said switching elements being responsive to said rectified reference sine wave to sequentially couple said associated direct current sources to said output circuit output terminals, thereby adding power from said direct current sources to said alternating sinusoidal output waveform.

2.      An inverter according to claim 1, characterised in that said output circuit comprises a four leg bridge circuit with said coupling means comprising a current amplifying semiconductor device in each leg, said output terminals connected between two of said legs, and said series end of said direct current sources connected between the other two of said legs.

3.      An inverter according to claim 2,
characterised by means alternately connecting said
rectified reference sine wave to a respective pair
of said current amplifying semiconductor devices in
opposite legs of said output circuit, to develop
said alternating sinusoidal output waveform of
alternating half cycle polarity at said output terminals.

4.      An inverter according to claim 2,
characterised in that each of said semiconductor
devices comprises a transistor.

5.      An inverter according to claim 2,
characterised in that each of said semiconductor
devices comprises a pair of Darlington connected
transistors.

6.      An inverter according to claim 1,
characterised in that each of said switching
elements includes a level set means for setting
a switching voltage level at which said switching
element respectively responds to said rectified
reference sine wave.

7.      An inverter according to claim 6,
characterised in that said level set means are set
to increasing voltage levels.

8.      An inverter according to claim 6,
characterised in that each of said switching
elements  includes a diode connected to said
associated direct current source.

0042235

9.    An inverter according to claim 8,
characterised in that said level set means biases
said diode to its non-conductive state until the
switching voltage level is reached, and thereafter
biases said diode to its conductive state to
couple the associated direct current source to
said output terminals.

10.    An inverter according to claim 9,
characterised in that each of said switching
elements includes a means for back biasing the
diode in an immediately adjacent switching
element as the respective switching voltage level
is reached in the next succeeding switching element.

11.    A DC to AC inverter characterised by:
        an oscillator generating a low power,
sinusoidal signal;
        rectifier means coupled to said sinusoidal
signal source to provide a rectified reference sine
wave having a first rectified half cycle and a second
rectified half cycle corresponding to the respective
half cycles of said sinusoidal signal;
        an output bridge circuit including four
circuit legs, each leg including a current amplifying
semiconductor device, said output bridge circuit
including output terminals connected between two
of said bridge leg circuits, and input terminals
connected between the other two of said bridge leg
circuits;
        means coupling said rectified references
sine wave first half cycle to a current amplifying semiconductor device in two opposite leg circuits,
and for subsequently coupling said rectified
reference sine wave second half cycle to a current
amplifying semiconductor device in the other two
leg circuits to provide an alternating output
waveform at said output terminals;

a series connected group of respective
batteries having one end of said series connected to
one of said output bridge circuit input terminals; and

a plurality of semiconductor switching
elements, each connected to a respective group of
said batteries at one end and to the other output
bridge circuit input terminals at the other end,
said semiconductor switching elements being coupled
alternately to said rectified reference sine wave
first half cycle and said second half cycle, to follow
said sine wave and to sequentially couple the
associated group of batteries to said output terminals,
thereby adding power to said alternating output
waveform.

12.     A DC to AC inverter according to claim 11,
characterised in that said plurality of semiconductor
elements includes means for setting each to a respective
level for switching response to said rectified reference
sine wave.

FIG.1

FOLLOWER PATTERN GENERATOR 10

BREAKPOINTS-SWITCHING 12

D.C. LEVELS 16

OUTPUT BRIDGE CIRCUIT 14 → A.C.

FIG. 2

32  30  28  26

40  38  36  34

SWITCH 46

SWITCH 44

SWITCH 42

OSC. 18 → DRIVER 20 → XFMR 22 → FULL WAVE RECTIFIER 24 → 39 → OUTPUT CIRCUIT 14 → A.C.

41

0042235

FIG. 3

FIG. 3A

0042235

3/3

## DOCUMENTS CONSIDERED TO BE RELEVANT

| Category | Citation of document with indication, where appropriate, of relevant passages | Relevant to claim |
|---|---|---|
| DX | US - A - 3 227 889 (PAYNTER)  <br> * Column 2, line 36 to column 8, line 2* | 1-4, 6-12 |
| | US - A - 3 391 323 (IKEDA)  <br> * Column 2, line 28 to column 9, line 35 * | 1-12 |
| A | US - A - 4 203 151 (BAKER)  <br> * Column 3, line 18 to column 18, line 5 * | 1 |
| A | US - A - 3 867 643 (BAKER)  <br> * Column 2, line 67 to column 8, line 33 * | 1 |
| A | US - A - 3 909 685 (BAKER)  <br> * Column 2, line 55 to column 8, line 30 * | 1 |
| A | US - A - 3 839 667 (KING)  <br> * Column 2, line 42 to column 8, line 29 * | 5 |
| A | ELECTRONICS INTERNATIONAL, vol. 53, no. 18, August 1980, New York, US H.J. NAGER "Transformerless inverter cuts photovoltaic system losses", pages 121-126.  <br> * Totally * | 1 |

### CLASSIFICATION OF THE APPLICATION (Int. Cl.³)

H 02 M 7/537
H 02 P 13/18

### TECHNICAL FIELDS SEARCHED (Int. Cl.³)

H 02 M 7/537
H 02 P 13/18

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-09-1981 | BERTIN |

EPO Form 1503.1   06.78